# EUROPEAN PATENT APPLICATION

(11) **EP 4 700 254 A1**
(43) Date of publication of application: **25.02.2026**
(21) Application number: 25195069.7
(22) Date of filing: 11.08.2025
(51) Int. Cl.: F16C 19/12, F16M 11/18, G12B 5/00

(54) **MOTORIZED TILT AND CONTINUOUS ROTATION STAGE**

(30) Priority: 23.08.2024 US 202463686398 P; 18.07.2025 US 202519273653
(71) Applicant: Thorlabs, Inc., Newton, NJ 07860 (US)
(72) Inventor: Moodie, Chris, Newton, 07860 (US); Javadipour, Mehrnaz, Newton, 07860 (US); Gaspar, Laszlo, Newton, 07860 (US)
(74) Representative: Grättinger Möhring von Poschinger Patentanwälte Partnerschaft mbB

(57) **Abstract**

A tilt and continuous rotation stage including: a central shaft (101) defining a main axis (111) of rotation for the stage; a bearing hub (102) rotatable about the central shaft; a top plate (104); a pair of ball bearings (103), mounted to the bearing hub, defining a tilt axis (112) for the top plate (104); a preload element (113) configured to cause the top plate to press against the pair of ball bearings; a pair of ball transfer units (106) mounted on the bottom surface of the top plate (104); a rotatable wedge ring (105) mounted concentrically to the bearing hub (102), the wedge ring (105) having a top surface inclined at an angle relative to the top plate and providing a running surface for the pair of ball transfer units (106); a first actuator configured to rotate the bearing hub about the main axis; and a second actuator configured to rotate the wedge ring about the main axis (111).

## Description

### CROSS REFERENCE TO RELATED APPLICATIONS

This application claims the benefit of U.S. Provisional Patent Application No. 63/686,398 filed on August 23, 2024. The disclosure of U.S. Provisional Patent Application No. 63/686,398 is hereby incorporated by reference.

### FIELD OF THE INVENTION

The present disclosure generally relates to positioning stages, and more particularly to a motorized tilt and continuous rotation stage.

### BACKGROUND

There exists a market need for an integrated pitch and yaw stage, to fill a gap in current market offerings. The needed stage can provide continuous range of rotation, while still allowing for precise adjustment in tilt. For example, the requirement for this stage includes the need for the drive and control system to be integral, within a 115mm x 115mm package. Currently this has not been achieved on a stage with dual axes of rotation by any manufacturers. This limitless range of positioning, within a relatively small form factor could allow for a vast array of applications, within photonics and a multitude of other industries. Especially when combined with an X-Y and/or Z linear stages, with up to 5 axes of movement in the same 115mm x 115mm area.

The standard range of movement for most pitch and yaw stages currently available is between 2 to 3 degrees. The difficulty of increasing this range comes from the drive mechanism and the relationship between the 2 axes of rotation. Generally, a large movement of one of these axes, would require the drive system of the second axis to follow the movement. This means any electrical connections would require slip rings or similar, adding to the complexity, cost and size of the design. Another alternative could be to combine a pitch stage with an additional rotation stage, but depending on the order the stacking of the stages there will always be a detrimental effect on the performance. There will either be a limit to rotational range because of the trailing wires, or an increased distance from the center of the tilt axis and increased lateral movement of the top platform. Added to this the cost of buying two stages and the complexity in the control system to synchronize their movements.

Therefore, there is a long-felt need for a pitch and yaw type stage that overcomes the above noted shortcomings in the existing products.

### SUMMARY

The main aspect of the present disclosure that separates it from current technologies is the continuous range of rotation, while still allowing for precise adjustment in tilt. The present disclosure proposes a pitch and yaw type stage, capable of ±3° of precision tilt movement in any direction, around 360° of continuous rotation.

An embodiment of the present disclosure provides a tilt and continuous rotation stage including: a central shaft defining a main axis of rotation for the stage; a bearing hub rotatable about the central shaft; a top plate; a pair of ball bearings, mounted to the bearing hub, defining a tilt axis for the top plate; a preload element configured to cause the top plate to press against the pair of ball bearings; a pair of ball transfer units mounted on the bottom surface of the top plate at opposite sides and perpendicular to the tilt axis; a rotatable wedge ring mounted concentrically to the bearing hub, the wedge ring having a top surface inclined at an angle relative to the top plate and providing a running surface for the pair of ball transfer units; a first actuator configured to rotate the bearing hub about the main axis; and a second actuator configured to rotate the wedge ring about the main axis; wherein a rotational movement applied to the wedge ring causes the ball transfer units to run up or down the wedge top surface, this in turn causes the top plate to tilt around the tilt axis.

### BRIEF DESCRIPTION OF THE DRAWINGS

FIG. 1 is a transparent perspective view of a motorized tilt and continuous rotation stage according to an embodiment.
FIG. 2 is a perspective view of a motorized tilt and continuous rotation stage according to an embodiment.
FIG. 3 is a cross-sectional view of a motorized tilt and continuous rotation stage according to an embodiment.
FIG. 4 is a cut-off perspective view of a motorized tilt and continuous rotation stage according to an embodiment.
FIG. 5 is another cut-off perspective view of a motorized tilt and continuous rotation stage according to an embodiment.
FIG. 6 is a perspective view of an angled ring according to an embodiment.
FIG. 7 is an elevation view of an angled ring according to an embodiment.
FIG. 8 shows how two cam followers sit on an angled ring according to an embodiment.
FIG. 9 shows a 0° tilt state of a stage according to an embodiment.
FIG. 10 shows a 3° tilt state of a stage according to an embodiment.
FIG. 11 shows a -3° tilt state of a stage according to an embodiment.

### DETAILED DESCRIPTION OF THE PREFERRED EMBODIMENTS

The description of illustrative embodiments according to principles of the present disclosure is intended to be read in connection with the accompanying drawings, which are to be considered part of the entire written description. In the description of embodiments of the disclosure disclosed herein, any reference to direction or orientation is merely intended for convenience of description and is not intended in any way to limit the scope of the present disclosure. Relative terms such as "lower," "upper," "horizontal," "vertical," "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise. Moreover, the features and benefits of the disclosure are illustrated by reference to the exemplified embodiments. Accordingly, the disclosure expressly should not be limited to such exemplary embodiments illustrating some possible non-limiting combination of features that may exist alone or in other combinations of features; the scope of the disclosure being defined by the claims appended hereto.

This disclosure describes the best mode or modes of practicing the disclosure as presently contemplated. This description is not intended to be understood in a limiting sense, but provides an example of the disclosure presented solely for illustrative purposes by reference to the accompanying drawings to advise one of ordinary skill in the art of the advantages and construction of the disclosure. In the various views of the drawings, like reference characters designate like or similar parts.

It is important to note that the embodiments disclosed are only examples of the many advantageous uses of the innovative teachings herein. In general, statements made in the specification of the present application do not necessarily limit any of the various claimed disclosures. Moreover, some statements may apply to some inventive features but not to others. In general, unless otherwise indicated, singular elements may be in plural and vice versa with no loss of generality.

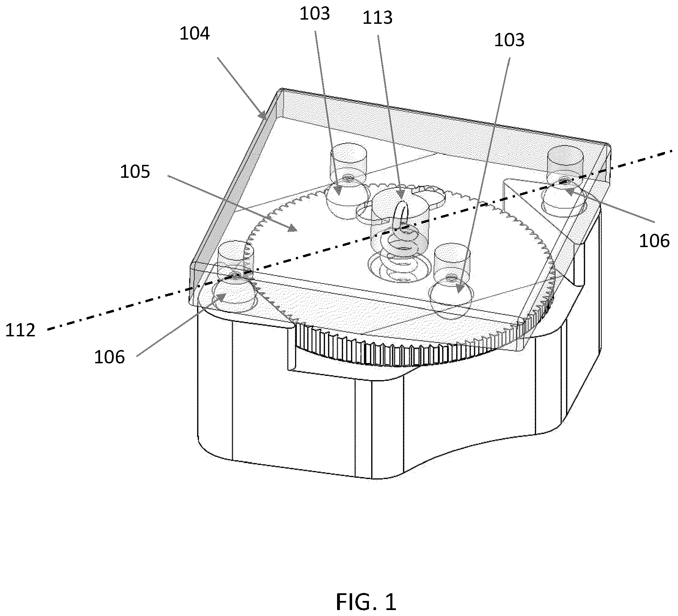

The novel and inventive aspect of the present disclosure is the central mechanism and the relationship between the two axes of rotation. The basic principle of the tilting mechanism consists of a moving world 104 that sits on a fixed horizontal axis of pitch 112, which in the examples shown in FIG. 1 could be a pair of ball bearings 106, with a spring 113 or magnetic preload. For higher load applications and alternative operating orientations (i.e., vertical or inverted), a physical axial could be used. This constrains the moving world in 5 degrees of freedom (Translation X, Y & Z and Rotation around X & Z). Below the moving world is a rotating wheel with an angled top surface. This angled surface acts as a running surface for a pair of cam followers, which are fixed to the bottom surface of the moving world. As this wheel is rotated, the cam followers (in this case a pair of ball transfer units (BTUs) or ball bearings 103) ride up and down each side of the angled surface, tilting the moving world around the fixed horizontal axis of pitch. This constrains the final degree of freedom of rotation around the Y axis.

This tilting mechanism could be used independently; operated manually or actuated as required, or it could be used in combination with a secondary rotating mechanism as seen below.

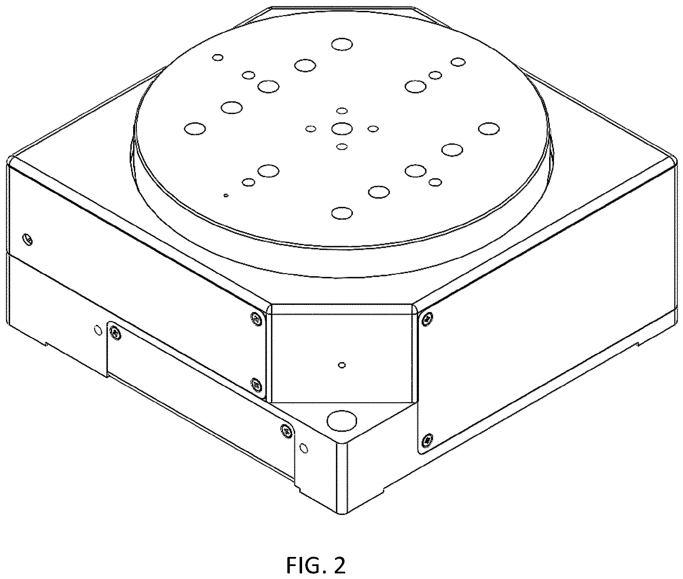

An example application of the present disclosure in this case is a pitch and yaw type stage, capable of ±3° of precision tilt movement in any direction, around 360° of continuous rotation. These two movements can be made independently or synchronously, depending on the application. The stage itself is 115mm W x 115mm D x 57mm H, and includes a circular moving platform which is Ø100mm, according to one embodiment as shown in FIG. 2.

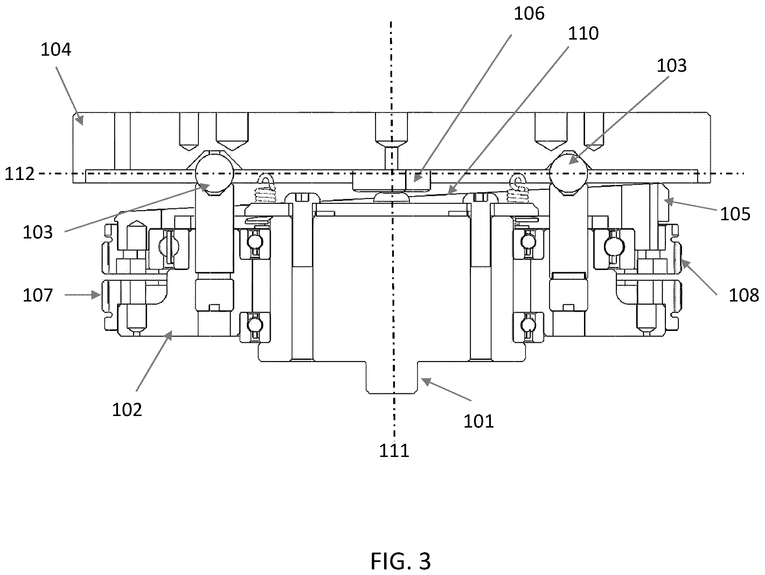

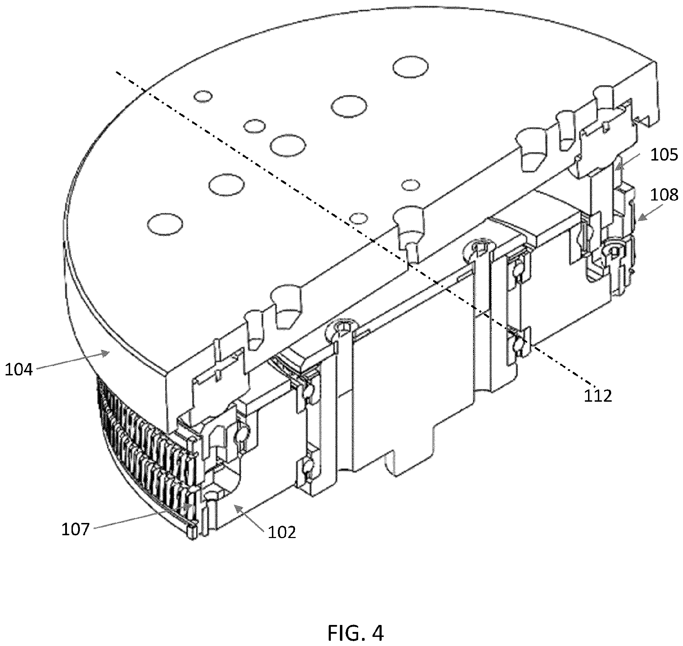

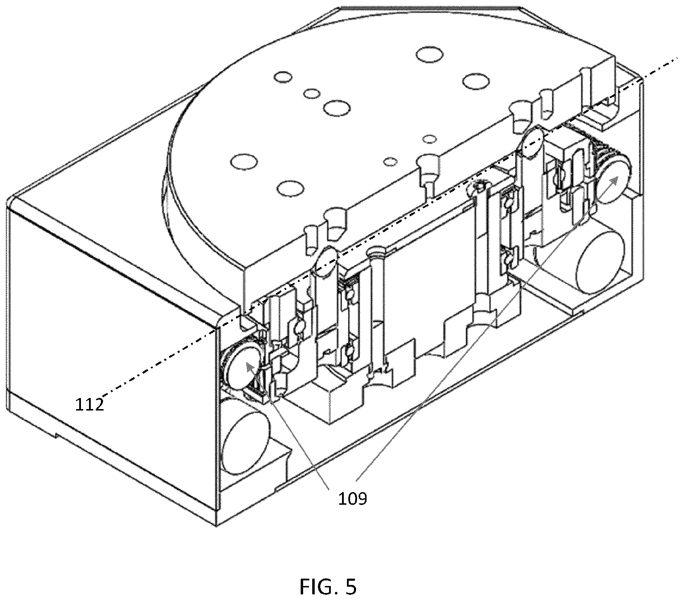

In one embodiment, as shown in FIGS. 3 - 5, the mechanism of the stage includes the following components:
a) The first is a central stub shaft 101, which locates the mechanism concentrically within the stage housing and acts as the main axis of rotation 111 for the stage.
b) Next is the main bearing hub 102, this rotates around the central stub shaft by means of a pair of back-to-back angular contact bearings. The main bearing hub acts as the main point of rotation of the stage.
c) A pair of ball bearings 103, mounted to the main bearing hub, act as the axis of tilt 112 for the top plate 104, they sit in a corresponding chamfered hole and slot. A set of extension springs 113 then provides the preload to hold the top plate against the ball bearings. This constrains the top plate in all three degrees of translation (X, Y, Z) and one degree of rotation (Y).
d) The next component is a rotating wedge ring 105, this is mounted concentrically to the main bearing hub, allowing for independent rotational movement. The inclined top surface 110 of the wedge ring 105 provides a running surface for a pair of ball transfer units (BTUs) 106 which act as cam followers. These BTUs are fixed at opposite sides on the bottom surface of the top plate, perpendicular to the tilt axis. The combination of the wedge ring and the BTUs constrains the top plate in one more degree of rotation (X). Any rotational movement applied to the wedge ring will cause the BTUs to run either up or down the wedge ring's top surface, this in turn causes the top plate to tilt around the fixed tilt axis.
e) The final components are the two worm wheels 107 and 108, mounted to the main bearing hub 102 and to the rotating wedge ring 105. When assembled with a pair of worm shafts 109, these provide the final constraint in rotation for the bearing hub and the wedge ring around the Z axis. This system allows the two worm wheels to be driven independently or synchronously, depending on the required movement.

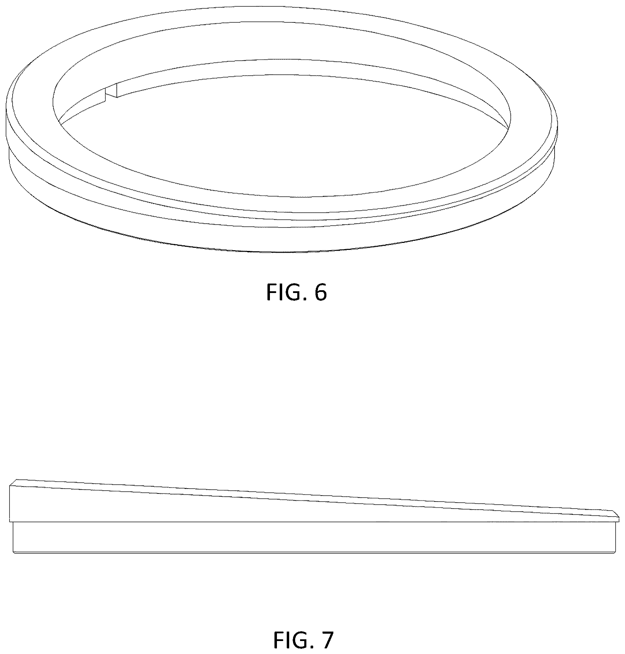

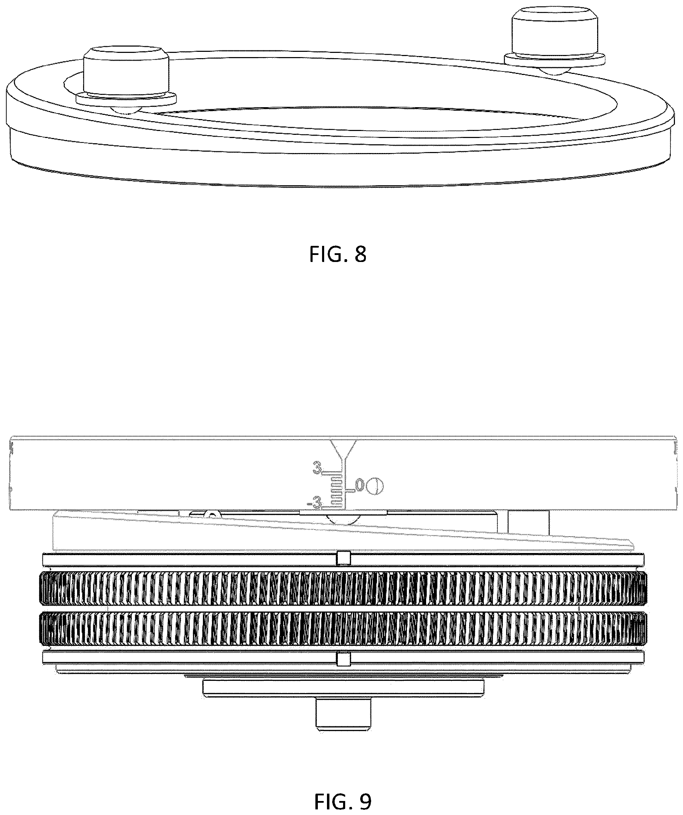

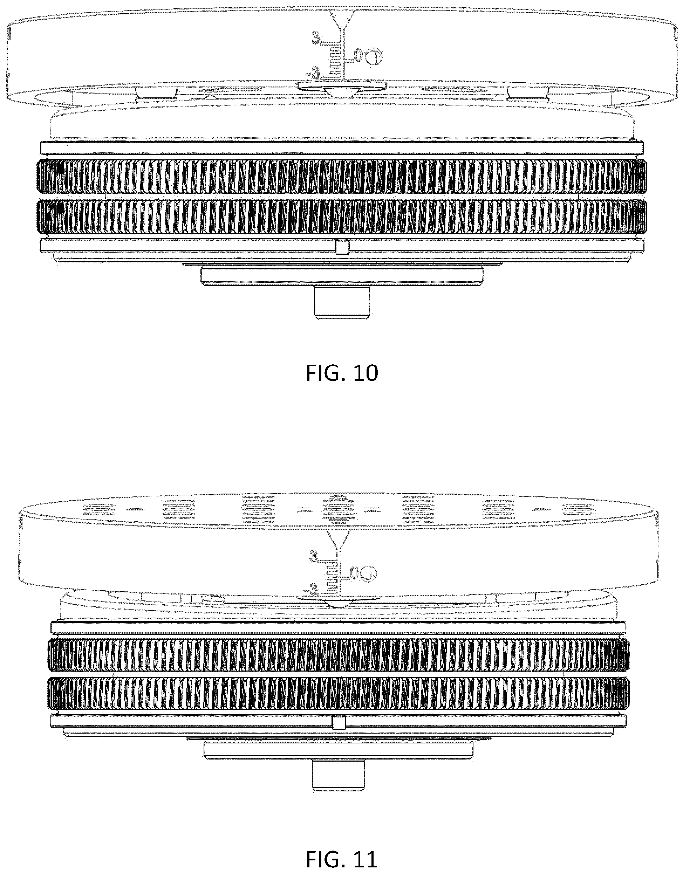

In one embodiment, the wedge ring comprises an angled ring mounted on a rotatable disc. Use of an angled ring may reduce the weight of the wedge ring and simplify the manufacturing process. FIG. 6 is a perspective view and FIG. 7 is an elevation view of the angled ring respectively. FIG. 8 illustrates how a first cam follower and a second cam follower sit on the top surface of the angled ring. As the cam followers run up and down along the top surface of the angled ring, the tilt angle changes. FIG. 9 shows a 0° tilt state when the first and second cam followers are at the same height on opposite mid points of the angled ring. FIG. 10 shows a 3° tilt state when the first cam follower is at the high point of the angled ring and the second cam follower is at the low point of the angled ring. FIG. 11 shows a -3° tilt state when the first cam follower is at the low point of the angled ring and the second cam follower is at the high point of the angled ring. The above working principle of the tilt mechanism applies also to the solid wedge ring 105 shown in FIG. 1.

In view of the above, an embodiment of the present disclosure provides the needed stage with the unique advantage that it can provide continuous range of rotation, while still allowing for precise adjustment in tilt.

While the present disclosure has been described at some length and with some particularity with respect to the several described embodiments, it is not intended that it should be limited to any such particulars or embodiments or any particular embodiment, but it is to be construed with references to the appended claims so as to provide the broadest possible interpretation of such claims in view of the prior art and, therefore, to effectively encompass the intended scope of the disclosure.

## Claims

1. A tilt and continuous rotation stage comprising:
a central shaft (101) defining a main axis of rotation (111) for the stage;
a bearing hub (102) rotatable about the central shaft;
a top plate (104);
a pair of ball bearings (103), mounted to the bearing hub, defining a tilt axis (112) for the top plate;
a preload element (113) configured to cause the top plate to press against the pair of ball bearings;
a pair of ball transfer units (106) mounted on the bottom surface of the top plate at opposite sides and perpendicular to the tilt axis;
a rotatable wedge ring (105) mounted concentrically to the bearing hub, the wedge ring having a top surface inclined at an angle relative to the top plate and providing a running surface for the pair of ball transfer units;
a first actuator (107) configured to rotate the bearing hub about the main axis; and
a second actuator (108) configured to rotate the wedge ring about the main axis;
wherein a rotational movement applied to the wedge ring causes the ball transfer units to run up or down the top surface of the wedge ring, and the running up or down in turn causes the top plate to tilt around the tilt axis.

2. The tilt and continuous rotation stage of claim 1, wherein the first actuator comprises a first worm wheel mounted on the bearing hub and a first worm shaft engaged with the first worm wheel; and the second actuator comprises a second worm wheel mounted on the wedge ring and a second worm shaft engaged with the second worm wheel.

3. The tilt and continuous rotation stage of claim 1, wherein the first and second actuators are configured to rotate the bearing hub and wedge ring independently or synchronously.

4. The tilt and continuous rotation stage of claim 1, wherein the stage is configured to provide ±3° of precision tilt movement in any direction, around 360° of continuous rotation about the main axis.

5. The tilt and continuous rotation stage of claim 1, wherein the rotatable wedge ring comprises an angled ring mounted on a rotatable disc, and a top surface of the angled ring being configured to provide the running surface for the pair of ball transfer units.
